# EUROPEAN PATENT APPLICATION

(11) **EP 4 660 274 A1**
(43) Date of publication of application: **10.12.2025**
(21) Application number: 24750364.2
(22) Date of filing: 31.01.2024
(51) Int. Cl.: C09J 201/10, C08G 59/20, C08G 59/40, C08G 59/50, C08K 3/013

(54) **CURABLE THERMOCONDUCTIVE ADHESIVE AND MODE FOR SUPPLYING SAME**

(30) Priority: 31.01.2023 JP 2023013583; 31.01.2023 JP 2023013584; 08.03.2023 JP 2023035923; 31.03.2023 JP 2023059573; 31.03.2023 JP 2023059531; 29.09.2023 JP 2023170651
(71) Applicant: Sekisui Chemical Co., Ltd., Osaka-shi, Osaka 530-8565 (JP)
(72) Inventor: FURUKAWA, Atsushi, Mishima-gun, Osaka 618-0021 (JP); IWAMOTO, Tatsuya, Mishima-gun, Osaka 618-0021 (JP); KOBAYASHI, Yusuke, Mishima-gun, Osaka 618-0021 (JP); YOSHIOKA, Tetsuro, Mishima-gun, Osaka 618-0021 (JP); IINO, Tatsuya, Mishima-gun, Osaka 618-0021 (JP); MORIMOTO, Kohei, Mishima-gun, Osaka 618-0021 (JP)
(74) Representative: Ter Meer Steinmeister & Partner
(86) International application number: PCT/JP2024/003180
(87) International publication number: WO 2024/162415

(57) **Abstract**

A curable thermally conductive adhesive comprising a curable composition comprising a curable binder and a thermally conductive filler, wherein a gel point at which values of a storage elastic modulus and a loss elastic modulus are equal is confirmed at 5 minutes or more and 60 minutes or less from the beginning of rheometer measurement when measured using a rheometer at a constant temperature of 25°C, and the storage elastic modulus at 25°C after a lapse of 60 minutes from the beginning of the rheometer measurement is 9.0×10⁵ Pa or more.

## Description

### Technical Field

The present invention relates to a curable thermally conductive adhesive and a thermally conductive member for use in electronics applications such as battery assemblies.

### Background Art

Thermally conductive compositions are used by, for example, being applied between a heating element and a heat dissipating element to propagate heat produced by the heating element and dissipate it from the heat dissipating element. Thermally conductive compositions in general are curable, and are often used as cured products after being applied and then cured. Thermally conductive compositions play an important role in a large number of electronics applications, for example, battery assemblies such as lithium-ion battery (LiB) assemblies for electric vehicles (EVs), power electronics, electronic packaging, LEDs, solar cells, and electrical grids.

For example, Patent Literature 1 discloses a thermally conductive composition which comprises an epoxy resin, a polyamide composition comprising a tertiary amide in the backbone and being amine-terminated, an amino functional compound comprising from 2 to 20 carbon atoms, a multifunctional (meth)acrylate, and an inorganic filler, and which may be suitable for use in electronics applications such as battery assemblies.

### Citation List

### Patent Literature

PTL1: JP 2021-512990 A

### Summary of Invention

### Technical Problem

Meanwhile, as the production of EVs continues to increase in the future, improving the room-temperature curability of thermally conductive compositions is one of the important issues to be addressed to improve the productivity thereof. Assembly manufacturers place an emphasis on temporary adhesion provided during the manufacturing process, and require that the components become movable after a certain period of time during the manufacturing process, or that is to say, the components can be temporarily fixed in place or placed upright. During temporary bonding, conformability to, for example, unevenness and depressions between the components is also required, and it is important during the pot life that the resin can be easily spread over the substrate with a light load. For example, what is required is an adhesive that enables components to be placed upright in one hour and enables the resin to be easily spread over the substrate with a light load during the pot life.

Also, in view of shortening the assembling time, assembly manufacturers assume that, for example, temporary bonding can be achieved after one hour while the bonded components are transported after 18 hours, and accordingly it is also an important issue to simultaneously achieve the development of adhesion in a short period of time, or after one day, and the pot life when considering efficiency and workability.

In Patent Literature 1, acrylate is added to increase fast curability, and polyamide is used from the viewpoint of health concerns. Polyamide has a low molecular weight, but is problematic in that the viscosity is increased by its interaction. Thus, while fast curability is achieved, a long pot life is not achieved.

Accordingly, an object of the present invention is to provide a curable thermally conductive adhesive that has low viscosity, fast curability, and a long pot life.

### Solution to Problem

As a result of having conducted diligent study, the inventors found that the problem can be solved by adjustments such that the gel point is confirmed at 5 minutes or more and 60 minutes or less from the beginning of rheometer measurement, and the storage elastic modulus at 25°C after a lapse of 60 minutes from the beginning of rheometer measurement is at a certain level or higher.

That is to say, the present invention provides [1] to [13] below.
[1] A curable thermally conductive adhesive comprising a curable composition comprising a curable binder and a thermally conductive filler,
   in a measurement with a rheometer at a constant temperature of 25°C, a gel point at which values of a storage elastic modulus and a loss elastic modulus are equal being confirmed at 5 minutes or more and 60 minutes or less from the beginning of rheometer measurement and a storage elastic modulus at 25°C after a lapse of 60 minutes from the beginning of the rheometer measurement is 9.0×10⁵ Pa or more.
[2] The curable thermally conductive adhesive according to [1], wherein in the measurement with the rheometer, a loss elastic modulus of the curable thermally conductive adhesive at 25°C after a lapse of 15 minutes from the beginning of the rheometer measurement is 3.0×10⁵ Pa or less.
[3] The curable thermally conductive adhesive according to [1] or [2], wherein the binder comprises an epoxy group-containing compound.
[4] The curable thermally conductive adhesive according to any one of [1] to [3], wherein the binder comprises at least one of an amine or a thiol.
[5] The curable thermally conductive adhesive according to any one of [1] to [4], wherein the binder comprises an epoxy group-containing compound and an amine.
[6] The curable thermally conductive adhesive according to [3] or [5], wherein the epoxy group-containing compound comprises a monofunctional epoxy group-containing compound.
[7] The curable thermally conductive adhesive according to any one of [1] to [6], wherein the binder comprises a Mannich base.
[8] The curable thermally conductive adhesive according to any one of [1] to [7], wherein the curable composition comprises a polyfunctional acrylate compound, an epoxy group-containing compound, and an amine.
[9] The curable thermally conductive adhesive according to any one of [1] to [8], wherein an equivalent ratio, which is a ratio of an equivalent of active hydrogen of the curing agent to an equivalent of a functional group of a component constituting a base resin contained in the curable composition, is 1.05 or more and 2.9 or less.
[10] A supply form of a curable thermally conductive adhesive, which is a supply form of the curable thermally conductive adhesive according to claim 1 or 2, wherein
   a first agent comprising a base resin of the binder and a second agent comprising a curing agent that is cured by being mixed with the first agent are provided in separate containers.
[11] The supply form of a curable thermally conductive adhesive according to [10], wherein a difference between a viscosity of the first agent and a compressive load of the second agent is 450 N or less.
[12] The supply form of a curable thermally conductive adhesive according to [10] or [11], wherein a ratio of a functional group concentration of the second agent to a functional group concentration of the first agent is 1.05 or more and 2.9 or less.
[13] Use of the curable thermally conductive adhesive according to any one of [1] to [10] as at least one of a gap filler between battery cells, a gap filler between a battery cell and a module housing, a gap filler between a battery module and a battery pack housing, or a gap filler between a battery cell and a battery pack housing.

### Advantageous Effects of Invention

The present invention can provide a curable thermally conductive adhesive that has low viscosity, fast curability, and a long pot life.

### Brief Description of Drawings

[Fig. 1] Fig. 1 is a schematic diagram showing a container set according to one embodiment.
[Fig. 2] Fig. 2 is a schematic diagram showing a container set according to another one embodiment.
[Fig. 3] Fig. 3 is a perspective diagram showing a representative configuration of a battery module according to the present invention.
[Fig. 4] Fig. 4 is a perspective diagram showing a representative configuration of a battery cell contained in a battery module.
[Fig. 5] Fig. 5 is a perspective diagram showing a battery assembly having a cell-to-pack structure.

### Description of Embodiments

### [Curable thermally conductive adhesive]

Below, the curable thermally conductive adhesive of the present invention will now be described in detail.

The curable thermally conductive adhesive of the present invention is formed of a curable composition containing a curable binder and a thermally conductive filler. In the present invention, when the storage elastic modulus and the loss elastic modulus at 25°C are measured using a rheometer (hereinafter, the measurement is also referred to as "rheometer measurement"), the gel point at which the storage elastic modulus and the loss elastic modulus are equal (hereinafter also simply referred to as a "gel point") is confirmed at 5 minutes or more and 60 minutes or less from the beginning of the measurement. Moreover, the storage elastic modulus at 25°C after a lapse of 60 minutes from the beginning of the measurement is 9.0×10⁵ Pa or more.

### <Gel point>

When the gel point is confirmed at less than 5 minutes from the beginning of the rheometer measurement, the pot life is short, the adhesive becomes highly viscous immediately after being applied to a substrate, and it is difficult to spread the adhesive over the substrate. When the gel point is confirmed at later than 60 minutes from the beginning of the rheometer measurement, development of excellent adhesion is delayed, and it is difficult for the adhesive to have fast curability. From these viewpoints, the gel point is preferably confirmed at 5 minutes or more and 50 minutes or less from the beginning of the rheometer measurement, and more preferably 10 minutes or more and 40 minutes or less from the beginning of the rheometer measurement.

Here, the gel point refers to the point at which the storage elastic modulus and the loss elastic modulus are equal when the storage elastic modulus and the loss elastic modulus of the adhesive are each measured using a rheometer in a 25°C environment. The "MCR-302e" rheometer manufactured by Anton Paar may be used.

The method for measuring the time at which the gel point is confirmed (hereinafter also referred to as a "gel time") is as described in the Examples.

The gel point can be regulated to the above predetermined ranges by, for example, suitably regulating the types and the amounts of the base resin of the binder component and the curing agent.

### <Storage elastic modulus>

When the storage elastic modulus at 25°C after a lapse of 60 minutes from the beginning of the rheometer measurement (hereinafter also referred to as "elastic modulus G'(60)") is less than 9.0×10⁵ Pa, it is difficult for the adhesive to exhibit excellent adhesion. From such a viewpoint, the elastic modulus G'(60) is preferably 9.2×10⁵ Pa or more, and more preferably 1.0×10⁶ Pa or more. The upper limit of the elastic modulus G'(60) is not particularly limited, and from the viewpoint of enabling the adhesive to exhibit suitable adhesion, is preferably 1.0×10⁷ Pa or less, more preferably 8.0×10⁶ Pa or less, and even more preferably 5.0×10⁶ Pa or less.

The elastic modulus G'(60) can be obtained by the measurement method described in the Examples.

The adhesive of the present invention preferably has a loss elastic modulus at 25° C after a lapse of 15 minutes from the beginning of the rheometer measurement (hereinafter also referred to as "elastic modulus G"(15)") of 3.0×10⁵ Pa or less, more preferably 2.5×10⁵ Pa or less, and even more preferably 2.0×10⁵ Pa or less. Due to the elastic modulus G"(15) being at the above upper limits or below, the adhesive does not cure too quickly, and the pot life is readily extended. Also, the adhesion after, for example, 18 hours is likely at a certain level or higher. On the other hand, from the viewpoint of ensuring a certain level of fast curability of the adhesive, the elastic modulus G"(15) is preferably 2.0×10³ Pa or more, more preferably 2.2×10³ Pa or more, and even more preferably 2.5×10³ Pa or more.

The elastic modulus G"(15) can be obtained by the measurement method described in the Examples.

The adhesive of the present invention preferably has a storage elastic modulus at 25°C after a lapse of 15 minutes from the beginning of the rheometer measurement (hereinafter also simply referred to as "elastic modulus G'(15)") of 2.5×10⁶ Pa or less, more preferably 2.0×10⁶ Pa or less, and even more preferably 1.7×10⁶ Pa or less. Due to the elastic modulus G'(15) being at the above upper limits or below, the adhesive does not cure too quickly, and the pot life is readily extended. Also, the adhesion after, for example, 18 hours is likely at a certain level or higher. On the other hand, from the viewpoint of ensuring a certain level of fast curability of the adhesive, the elastic modulus G'(15) is preferably 5.0×10² Pa or more, more preferably 8.0×10² Pa or more, and even more preferably 1.0×10³ Pa or more.

The elastic modulus G'(15) can be obtained by the measurement method described in the Examples.

The elastic modulus G'(60), elastic modulus G"(15), and elastic modulus G'(15) can be regulated to the above predetermined ranges by, for example, suitably regulating the types and the amounts of the base resin of the binder component and the curing agent. The elastic modulus G'(60) and the elastic modulus G'(15) can also be readily increased by enhancing the curability.

### <Thermal conductivity>

The adhesive of the present invention has a thermal conductivity of the cured product thereof which is preferably 1.3 W/(m·K) or more, more preferably 1.5 W/(m·K) or more, and even more preferably 1.6 W/(m·K) or more. Due to the adhesive having the thermal conductivity of the cured product being at these lower limits or above, good thermally conducting properties are attained. Accordingly, when the adhesive is used in, for example, a battery cell assembly, heat produced from battery cells can be efficiently transferred to a module housing and a battery pack via the cured product (a thermally conductive member) of the adhesive, and an excessively increased temperature of the battery cells can be suppressed. A higher thermal conductivity is more preferable and, practically, the thermal conductivity is, for example, 7.0 W/(m·K) or less.

Thermal conductivity can be measured in accordance with ASTM D 5470-06.

Specifically, the adhesive is applied in an excessive amount so as to be larger than the thickness at the time of measurement such that the measurement die that serves as a heating element is covered, then sandwiched between with the heat dissipating element, and compressed with a load of 30 psi until the thickness of the adhesive becomes 1.0 mm, 1.5 mm, and 2.0 mm, and the thermal resistances at these thicknesses are measured. The thickness can be regulated by a spacer. A graph depicting these three thermal resistance values is created, with the horizontal axis representing thickness and the vertical axis representing thermal resistance, and the least squares method is used to obtain an approximate straight line for the three points. The inclination of the approximate straight line is defined as thermal conductivity.

### <Adhesion>

The adhesive of the present invention preferably has an adhesion at 1 hour from the beginning of mixing the components (hereinafter also referred to as "adhesion 1") of 0.03 MPa or more and 0.7 MPa or less, more preferably 0.05 MPa or more and 0.5 MPa or less, and even more preferably 0.08 MPa or more and 0.3 MPa or less. When the adhesion 1 is at the lower limits or above, the minimum adhesion required for temporarily fixing the members in place can be ensured. Also, when the adhesion 1 is at the upper limits or below, the members after being temporarily fixed in place can be easily peeled off for, for example, correcting the positions of the members.

The adhesive of the present invention preferably has an adhesion at 18 hours from the beginning of mixing the components (hereinafter also referred to as "adhesion 2") of 0.8 MPa or more, more preferably 0.9 MPa or more, and even more preferably 1.2 MPa or more. When the adhesion 2 is at the lower limits or above, the adhesive is sufficiently cured and, for example, when transporting the members bonded via the adhesive, the members can be prevented from peeling off even after receiving vibrations associated with the transporting. The upper limit of the adhesion 2 is not particularly limited, and is practically, for example, 5 MPa or less, preferably 3 MPa or less, and more preferably 2 MPa or less.

The above adhesions can be both determined by the measurement method described in the Examples.

### [Binder]

The adhesive of the present invention contains a curable binder. The curable binder may be thermally curable, photo-curable, or moisture-curable, and is preferably thermally curable. The binder may be any of a one-component curable type and a two-component curable type, and is preferably a two-component curable type.

The two-component curable type is used by mixing a first agent containing a base resin and a second agent containing a curing agent, and curing is initiated by mixing the first agent and the second agent. Accordingly, in the two-component curable type, a curing agent is preferably used that cures when mixed with the base resin of the first agent. Also, a curing agent is preferable that can cure at room temperature (25°C) when mixed with the base resin of the first agent.

The binder is preferably any of a urethane-based binder, a silicone-based binder, an acryl-based binder, an epoxy-based binder, and an organic polymer having a hydrolyzable silyl group, and among these, an epoxy-based binder is preferable. When such a specific binder is used, fast curability is readily imparted to the adhesive, and the pot life is readily extended.

One binder may be used singly, or two or more may be used in combination.

Here, examples of the urethane-based binder include those composed of a polyol compound as a base resin and a polyisocyanate compound as a curing agent.

The silicone-based binder may be any of a condensation-curable silicone resin and an addition reaction-curable silicone resin, and is preferably an addition reaction-curable silicone resin. The addition reaction curable silicone resin is preferably composed of a silicone resin that constitutes a base resin and a curing agent that cures the base resin, and, for example, in the case of an addition reaction curable silicone resin, organopolysiloxane having an alkenyl group is preferably used as a base resin, and organohydrogenpolysiloxane is preferably used as a curing agent.

The epoxy-based binder may be composed of an epoxy group-containing compound as a base resin and a curing agent.

The acryl-based binder may be a component that constitutes an acryl-based polymer by being cured, and examples include alkyl (meth)acrylate, hydroxyalkyl (meth)acrylate, (meth)acrylic acid, (meth)acrylamide, and urethane (meth)acrylate. Also, the acryl-based binder may contain a vinyl monomer that is copolymerizable with the acryl-based compounds. Moreover, the acryl-based binder may be at least partially a polymer of an acryl-based compound, or a copolymer of an acryl-based compound and a vinyl monomer. The acryl-based binder may be a monofunctional acrylate compound, or may be a polyfunctional acrylate compound.

The organic polymer having a hydrolyzable silyl group has a hydrolyzable silyl group, and can be hydrolyzed by water such as moisture to form silanol groups, and then silanol groups can undergo condensation polymerization with each other or with the hydrolyzable silyl group to form a siloxane bond. Accordingly, the organic polymer forms a crosslinked structure and cures, and thereby a rubber-like elastic body is obtained. The silanol group means a hydroxy group directly bonded to a silicon atom (Si-OH). The hydrolyzable silyl group is preferably an alkoxysilyl group, and specific examples include a trimethoxysilyl group, a dimethoxysilyl group, a triethoxysilyl group, and a diethoxysilyl group. On the other hand, examples of the organic polymer include polyethers such as polyalkylene oxide.

Below, a case where an epoxy-based binder is used as the binder will now be described in detail.

### (Epoxy group-containing compound)

As described above, when the binder is an epoxy-based binder, the binder preferably contains an epoxy group-containing compound. Due to the epoxy group-containing compound used, the adhesion of the adhesive is readily regulated to a suitable range. The epoxy group-containing compound is a compound having one or more epoxy groups. The epoxy group-containing compound may be a polyfunctional epoxy group-containing compound having two or more epoxy groups, or a monofunctional epoxy group-containing compound having one epoxy group.

The adhesive of the present invention preferably contains at least a polyfunctional epoxy group-containing compound. Due to the polyfunctional epoxy group-containing compound contained in the adhesive, the rate of reaction between the base resin and the curing agent is increased, the time until the gel point is confirmed is shortened, and fast curability is readily exhibited.

The adhesive may further contain a monofunctional epoxy group-containing compound in addition to the polyfunctional epoxy group-containing compound. Due to the monofunctional epoxy group-containing compound further contained in the adhesive, the rate of reaction between the base resin and the curing agent becomes suitable, the pot life is readily extended, and the initial viscosity is readily lowered. Moreover, the time until the gel point is confirmed can be prevented from becoming excessively short.

When a polyfunctional epoxy resin and a monofunctional epoxy resin are used in combination, the mass ratio of the monofunctional epoxy resin to the polyfunctional epoxy resin (monofunctional/polyfunctional) is preferably 10/90 or more and 90/10 or less, more preferably 15/85 or more and 75/25 or less, even more preferably 20/80 or more and 70/30 or less, and even more preferably 25/75 or more and 60/40 or less.

The polyfunctional epoxy group-containing compound may be a bifunctional or trifunctional epoxy group-containing compound, and a bifunctional epoxy group-containing compound is preferably used. Specific examples of the polyfunctional epoxy group-containing compound include epoxy resins having an aromatic skeleton, such as phenol novolac epoxy resins, resorcinol epoxy resins, epoxy resins having a bisphenol skeleton, epoxy resins having a naphthalene skeleton, epoxy resins having a fluorene skeleton, epoxy resins having a biphenyl skeleton, epoxy resins having a bi(glycidyloxyphenyl)methane skeleton, epoxy resins having a xanthene skeleton, epoxy resins having an anthracene skeleton, and epoxy resins having a pyrene skeleton.

Also, examples include epoxy resins having an alicyclic skeleton such as epoxy resins having a dicyclopentadiene skeleton and epoxy resins having an adamantane skeleton.

Further examples include aliphatic epoxy resins, e.g., polyalkylene glycol diglycidyl ethers such as butanediol diglycidyl ether, neopentyl glycol diglycidyl ether, trimethylolpropane polyglycidyl ether, polyethylene glycol diglycidyl ether, polypropylene glycol diglycidyl ether, and polytetramethylene glycol diglycidyl ether.

In addition, hydrogenated or modified products of the epoxy resins exemplified above can also be used as epoxy resins.

Examples of the epoxy resins having a bisphenol skeleton include epoxy resins having a bisphenol A, bisphenol F, or bisphenol S type bisphenol skeleton.

Examples of the resorcinol epoxy resins include resorcinol diglycidyl ether.

Examples of the epoxy resins having a naphthalene skeleton include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of the epoxy resins having a fluorene skeleton include 9,9-bis(4-glycidyloxyphenyl)fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl)fluorene, 9,9-bis(4-glycidyloxy-3,5-dimethylphenyl)fluorene, 9,9-bis(4-glycidyloxy-3,5-dichlorophenyl)fluorene, and 9,9-bis(4-glycidyloxy-3,5-dibromophenyl)fluorene.

Examples of the epoxy resins having a biphenyl skeleton include 4,4'-diglycidylbiphenyl and 4,4'-diglycidyl-3,3',5,5'-tetramethylbiphenyl. Examples of the epoxy resins having a bi(glycidyloxyphenyl)methane skeleton include 1,1'-bi(2,7-glycidyloxynaphthyl)methane, 1,8'-bi(2,7-glycidyloxynaphthyl)methane, 1,1'-bi(3,7-glycidyloxynaphthyl)methane, 1,8'-bi(3,7-glycidyloxynaphthyl)methane, 1,1'-bi(3,5-glycidyloxynaphthyl)methane, 1,8'-bi(3,5-glycidyloxynaphthyl)methane, 1,2'-bi(2,7-glycidyloxynaphthyl)methane, 1,2'-bi(3,7-glycidyloxynaphthyl)methane, and 1,2'-bi(3,5-glycidyloxynaphthyl)methane.

Examples of the epoxy resins having a xanthene skeleton include 1,3,4,5,6,8-hexamethyl-2,7-bis-glycidylmethoxy-9-phenyl-9H-xanthene. Examples of the epoxy resins having an anthracene skeleton include those having one or more anthracene skeletons and two or more epoxy groups or glycidyl groups per molecule.

Examples of the epoxy resins having a pyrene skeleton include those having one or more pyrene skeletons and two or more epoxy groups or glycidyl groups per molecule.

Examples of the epoxy resins having a dicyclopentadiene skeleton include dicyclopentadiene dioxide and phenol novolac epoxy resins having a dicyclopentadiene skeleton. Examples of the epoxy resins having an adamantane skeleton include 1,3-bis(4-glycidyloxyphenyl)adamantane and 2,2-bis(4-glycidyloxyphenyl)adamantane.

Among the above bifunctional epoxy group-containing compounds, from the viewpoint of increasing the storage elastic modulus to readily enhance adhesive strength and mechanical strength, epoxy resins having an aromatic skeleton are preferable and, in particular, bisphenol-type epoxy resins that are epoxy resins having a bisphenol skeleton are preferable. Also, an epoxy resin having an aromatic skeleton and an aliphatic epoxy resin are preferably used in combination.

One bifunctional epoxy group-containing compound may be used singly, or two or more may be used in combination.

Examples of the monofunctional epoxy group-containing compound include monofunctional epoxy resins having an aromatic ring such as phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene. The monofunctional epoxy group-containing compound having an aromatic ring is more preferably an epoxy group-containing compound having a phenyl group. By using the monofunctional epoxy group-containing compound having an aromatic ring, the storage elastic modulus is increased, and adhesion is thus readily increased.

The monofunctional epoxy group-containing compound, from the viewpoint of high safety of feedstocks, is also preferably an aliphatic monofunctional epoxy group-containing compound, and specific examples include glycidyl ethers of aliphatic alcohols. Here, the aliphatic alcohol may have a branched structure or a linear structure and, from the viewpoint of enhancing elongation, preferably has a linear structure. The aliphatic alcohol may have, for example, about 4 to 24 carbon atoms and preferably has 10 to 20 carbon atoms. From the viewpoint of enhancing elongation, the aliphatic alcohol is preferably a saturated aliphatic alcohol. Specific examples of the glycidyl ethers of aliphatic alcohols include butyl glycidyl ether, decyl glycidyl ether, lauryl glycidyl ether, myristyl glycidyl ether, cetyl glycidyl ether, and stearyl glycidyl ether. The monofunctional epoxy group-containing compound may be different from those described above, and examples include monofunctional epoxy group-containing compounds having a glycidyl group but not having an ether group such as 1,2-epoxybutane or propylene oxide.

One monofunctional epoxy group-containing compound may be used singly, or two or more may be used in combination.

The epoxy group-containing compound to be used may have a molecular weight of, for example, 2000 or less, preferably 1000 or less, and more preferably 500 or less. By using an epoxy group-containing compound having a certain molecular weight value or less, the viscosity of the adhesive can be lowered, and also the thermally conductive filler can be highly packed. The molecular weight of the epoxy group-containing compound is, for example, 100 or more, preferably 150 or more, more preferably 200 or more, and even more preferably 250 or more. By regulating the molecular weight of the epoxy group-containing compound to a certain value or higher, an unnecessarily high crosslinking density can be prevented, and elongation is readily enhanced. The epoxy group-containing compound is preferably liquid at room temperature (25°C).

The epoxy equivalent of the epoxy group-containing compound is preferably 1000 g/eq or less, more preferably 500 g/eq or less, and even more preferably 375 g/eq or less, and is preferably 100 g/eq or more, more preferably 125 g/eq or more, and even more preferably 140 g/eq or more.

The epoxy group-containing compound is preferably liquid at room temperature (25°C). The viscosity of the epoxy resin at 25°C is not particularly limited, and may be, for example, 50 Pa·s or less, and is preferably 10 Pa·s or less. The viscosity of the epoxy resin at 25°C is not particularly limited, and may be, for example, 0.5 mPa·s or more, or may be 1 mPa·s or more.

The viscosities of the epoxy resin and the amine compound, which will be described below, are those measured under conditions having 10 rpm and 25°C using a cone-plate viscometer.

The content of the epoxy group-containing compound in the adhesive is, for example, 2% by mass or more and 20% by mass or less based on the total amount of the curable composition. When the content of the epoxy group-containing compound is 2% by mass or more, adhesive strength and elongation are readily increased. When the content is 20% by mass or less, uncured components of the epoxy group-containing compound are unlikely present, and thus inhibition of bonding by the uncured components can be prevented.

The content of the epoxy group-containing compound is preferably 3% by mass or more and 15% by mass or less, more preferably 4% by mass or more and 12% by mass or less, and even more preferably 5% by mass or more and 10% by mass or less, based on the total amount of the curable composition.

### (Curing agent)

The binder preferably contains a curing agent that cures the base resin, and specifically the binder preferably contains at least one of an amine or a thiol. The at least one of an amine or a thiol is preferably used when the binder contains an epoxy group-containing compound. Containing an amine or a thiol as a curing agent, the binder can be readily regulated to a practical curing speed at room temperature. Also, the adhesion of the adhesive is readily increased.

The amine may be a polyamine such as a diamine or a triamine or may be a monoamine, and is preferably a polyamine such as a diamine or a triamine.

Specific examples of the amine include polyoxyalkylene amines such as polyoxyethylene diamine, poly(oxyethylene/oxypropylene) diamine, polyoxypropylene diamine, poly(oxybutylene/oxypropylene) diamine, polyethylene glycol bis(propylamine), trimethylolpropane poly(oxypropylene) triamine, glyceryl poly(oxypropylene) triamine, and methoxypoly(oxyethylene/oxypropylene)-2-propylamine; aromatic ring-containing amines such as m-phenylenediamine, p-phenylenediamine, m-xylylenediamine, p-xylylenediamine, tolylene-2,4-diamine, tolylene-2,6-diamine, mesitylene-2,4-diamine, mesitylene-2,6-diamine, 3,5-diethyltolylene-2,4-diamine, 3,5-diethyltolylene-2,6-diamine, biphenylenediamine, 4,4-diaminodiphenylmethane, 2,5-naphthylenediamine, 2,6-naphthylenediamine, and reaction products of m-xylylenediamine and styrene; aliphatic amines such as 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,8-octanediamine, 2-methyl-1,9-nonanediamine, and 2,7-dimethyl-1,8-octanediamine; alicyclic amines such as 1,3-bis(aminomethyl)cyclohexane, 1,4-bis(aminomethyl)cyclohexane, cyclohexanediamine, methylcyclohexanediamine, and isophoronediamine; and amidoamines.

Examples of amidoamines include those obtained by reacting aliphatic dicarboxylic acids such as succinic acid, glutaric acid, adipic acid, pimelic acid, suberic acid or azelaic acid, or carboxylic acid compounds such as fatty acids or dimer acids, with aliphatic polyamines or polyamines having a polyoxyalkylene chain.

A Mannich base may be used as the amine. The Mannich base may be any Mannich base that can be used in an amine curing agent, and, for example, a Mannich base obtained by reacting a phenol-based compound, an aldehyde compound, and an amine compound may be used. When a Mannich base in which a phenol-based compound is used is contained, the reaction between the base resin and the curing agent is promoted by the phenol structure contained in the Mannich base, the time until the gel point is confirmed is shortened, and excellent fast curability is readily exhibited. Among the Mannich bases, a phenalkamine-type Mannich base is preferably used.

Among those described above, from the viewpoint of attaining a certain or higher rate of reaction with the base resin and readily ensuring fast curability, polyamines or, in particular, triamines are more preferably used, and a diamine and a triamine are even more preferably used in combination. Diamines and triamines have different rates of reaction with the base resin, and using two or more amines having different rates of reaction in combination enables the reaction between the base resin and the curing agent to partially proceed, thus the time until the gel point is confirmed can be regulated to a predetermined range, thus fast curability is ensured, and the pot life can be extended. In this case, diamines and triamines are both more preferably polyoxyalkylene amines.

When using an amidoamine, the amidoamine is preferably used in combination with a diamine or a triamine different from the amidoamine. Moreover, when using a Mannich base, the amine curing agent is preferably a combination of the Mannich base with a diamine or a triamine different from the Mannich base, and, in particular, is more preferably a combination of the Mannich base with a triamine. In these cases, the diamine and the triamine are both preferably polyoxyalkylene amines. As described above, by using a combination of two types of amines as the amine curing agent, the time until the gel point is confirmed is regulated to a predetermined range, thus fast curability is ensured, and the pot life can be extended.

The molecular weight of the amine used as the curing agent from the viewpoint of increasing fast curability and from the viewpoint of enabling the viscosity of the adhesive before being cured to be lowered is preferably 3000 or less, more preferably 1000 or less, even more preferably 600 or less, and yet more preferably 500 or less. The molecular weight of the amine curing agent is not particularly limited, and is, for example, 100 or more, preferably 150 or more, and even more preferably 200 or more.

The viscosity at 25°C of the amine used as the curing agent from the viewpoint of increasing fast curability and from the viewpoint of enabling the viscosity of the adhesive before being cured to be lowered is preferably 15 Pa·s or less, more preferably 10 Pa·s or less, even more preferably 5 Pa·s or less, and yet more preferably 3 Pa·s or less. The viscosity of the amine curing agent at 25°C is not particularly limited, and is, for example, 0.03 Pa·s or more, preferably 0.05 Pa·s or more, and more preferably 0.07 Pa·s or more.

The content of the amine in the adhesive is, for example, 2% by mass or more and 20% by mass or less based on the total amount of the curable composition. When the amine content is 2% by mass or more, the base resin is sufficiently cured, and the elastic modulus G'(60) and adhesion are readily increased. When 20% by mass or less, the base resin can be cured without containing an excessive amount of amine.

The amine content is preferably 3% by mass or more and 15% by mass or less, more preferably 4% by mass or more and 12% by mass or less, and even more preferably 5% by mass or more and 10% by mass or less, based on the total amount of the curable composition.

Examples of the thiol include polythiols such as dithiols and trithiols. Specific examples of the thiol include esters of polyols and mercapto organic acids, such as pentaerythritol tetrakis(3-mercaptobutyrate), 1,4-bis(3-mercaptobutyryloxy)butane, and trimethylolpropane tris(3-mercaptobutyrate); aliphatic thiols such as alkanedithiols; and aromatic ring-containing thiols such as xylylenedithiol.

The active hydrogen equivalent of the amine and the thiol contained in the adhesive is not particularly limited, and is, for example, 15 g/eq or more, preferably 25 g/eq or more, and more preferably 30 g/eq or more, and is, for example, 250 g/eq or less, preferably 200 g/eq or less, and more preferably 150 g/eq or less.

In the present invention, when an epoxy-based binder is used, preferably a polyfunctional acrylate compound is further contained as a base resin in addition to the epoxy group-containing compound. That is to say, the binder may be composed of an epoxy group-containing compound as a base resin and a curing agent represented by an amine, or may be composed of an epoxy group-containing compound and a polyfunctional acrylate compound as base resins and a curing agent represented by an amine.

The polyfunctional acrylate compound used in combination with the epoxy group-containing compound will now be described below.

### (Polyfunctional acrylate compound)

The polyfunctional acrylate compound is a compound having two or more functional groups (i.e., (meth)acryloyl groups). The polyfunctional acrylate compound promptly reacts with the curing agent or, in particular, an amine. Thus, by using the polyfunctional acrylate compound, the gel point is readily confirmed promptly, fast curability is imparted to the adhesive, and a certain level of adhesion is imparted at the initial stage of curing.

A polyfunctional (meth)acrylate is preferably used as the polyfunctional acrylate compound, and an ester of a polyfunctional polyol and (meth)acrylic acid is more preferably used.

Herein, the term "(meth)acryloyl group" means any of an acryloyl group and a methacryloyl group, the term "(meth)acrylate" means any of an acrylate and a methacrylate, and the same applies to other similar terms.

Examples of bifunctional acrylate compounds among polyfunctional acrylate compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dimethyloltricyclodecane di(meth)acrylate, ethylene glycol di(meth)acrylate, neopentyl glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethylol dicyclopentadienyl di(meth)acrylate, ethylene oxide-modified isocyanuric acid di(meth)acrylate, 2-hydroxy-3-(meth)acryloyloxypropyl (meth)acrylate, carbonate diol di(meth)acrylate, polyether diol di(meth)acrylate, polyester diol di(meth)acrylate, polycaprolactone diol di(meth)acrylate, and polybutadiene diol di(meth)acrylate.

Examples of tri- or higher functional acrylate compounds among polyfunctional acrylate compounds include trimethylolpropane tri(meth)acrylate, glycerin tri(meth)acrylate, pentaerythritol tetra(meth)acrylate, alkylene oxide-added trimethylolpropane tri(meth)acrylates such as ethylene oxide-added trimethylolpropane tri(meth)acrylate and propylene oxide-added trimethylolpropane tri(meth)acrylate, caprolactone-modified trimethylolpropane tri(meth)acrylate, ethylene oxide-added isocyanuric acid tri(meth)acrylate, propylene oxide-added glycerin tri(meth)acrylate, ditrimethylolpropane tetra(meth)acrylate, alkylene oxide-added pentaerythritol tetra(meth)acrylate, dipentaerythritol penta(meth)acrylate, dipentaerythritol hexa(meth)acrylate, tripentaerythritol octa(meth)acrylate, tetrapentaerythritol deca(meth)acrylate, tripentaerythritol hepta(meth)acrylate, and tetrapentaerythritol nona(meth)acrylate.

The number of functional groups in the polyfunctional acrylate compound is preferably 3 or more, more preferably 4 or more, and even more preferably 5 or more. When the number of functional groups in the polyfunctional acrylate compound is large, the time until the gel point is confirmed is shortened, thus fast curability is increased, and adhesion at the initial stage of curing is readily increased. The upper limit of the number of functional groups in the polyfunctional acrylate compound is not particularly limited, and may be, for example, 10 or less, or may be 8 or less.

From the viewpoint of increasing fast curability and enabling the viscosity of the adhesive before being cured to be lowered, the molecular weight of the polyfunctional acrylate compound is preferably at a certain level or lower. The specific molecular weight of the polyfunctional acrylate compound may be, for example, 5000 or less, and is preferably 3000 or less, more preferably 1000 or less, and even more preferably 700 or less. The polyfunctional acrylate compound having a molecular weight of, for example, 150 or more, preferably 200 or more, more preferably 250 or more, and even more preferably 450 or more may be used. Due to the molecular weight of the polyfunctional acrylate compound being a certain value or higher, the compressive load at the initial stage of curing is suitably lowered, the crosslinking density can be prevented from becoming unnecessarily high, and thus elongation and adhesion are readily enhanced.

From the viewpoint of readily lowering the viscosity of the adhesive before being cured, the polyfunctional acrylate compound is preferably liquid at room temperature (25°C).

The functional group equivalent of the polyfunctional acrylate compound is not particularly limited, and is preferably 500 g/eq or less, more preferably 300 g/eq or less, and even more preferably 150 g/eq or less, and is preferably 75 g/eq or more, more preferably 80 g/eq or more, and even more preferably 85 g/eq or more.

In the adhesive, the ratio of the number of functional groups of the polyfunctional acrylate compound to the number of functional groups of the epoxy resin may be about 0.1 or more and 1.5 or less, and is preferably 0.2 or more and 1.2 or less, more preferably 0.3 or more and 1.0 or less, and even more preferably 0.4 or more and 0.85 or less. When the ratio of the number of functional groups of the polyfunctional acrylate compound is within a predetermined range, the amine and the polyfunctional acrylate compound are preferentially cured at the initial stage, fast curability is exhibited, and, on the other hand, the reaction between the amine and the epoxy resin is suppressed, thus the compressive load at the initial stage of curing is kept low, and the pot life can be extended.

The content of the polyfunctional acrylate compound is, for example, 10% by mass or less, and preferably 8% by mass or less, based on the total amount of the curable composition. When the content of the polyfunctional acrylate compound is at the above upper limits or below, the polyfunctional acrylate compound is prevented from causing excessive initial curing, and the pot life is readily extended. When the content of the polyfunctional acrylate compound is small, moisture resistance is also enhanced. Accordingly, for example, even when the adhesive after being cured is used for a long period of time under high temperature and high humidity conditions, a high adhesive strength can be maintained. The content of the polyfunctional acrylate compound is more preferably 6% by mass or less, and even more preferably 4% by mass or less.

The content of the polyfunctional acrylate compound is preferably at a certain level or higher to exhibit fast curability and increase adhesion at the initial stage of curing, and is, for example, 0.3% by mass or more, preferably 0.5% by mass or more, more preferably 1% by mass or more, and even more preferably 1.5% by mass or more, based on the total amount of the curable composition.

The equivalent ratio in the curable composition is preferably 1.05 or more and 2.9 or less. The equivalent ratio in the curable composition is the equivalent ratio of the curing agent to the base resin constituting the binder and, specifically, is the ratio of the number of active hydrogen atoms of the curing agent to the number of functional groups of the components constituting the base resin contained in the curable composition.

Accordingly, when the binder is composed of an epoxy group-containing compound and an amine, the equivalent ratio is the ratio of the equivalent of active hydrogen of amino groups contained in the amine to the equivalent of epoxy groups contained in the epoxy group-containing compound. Also, when the binder is composed of an epoxy group-containing compound, a polyfunctional (meth)acrylate, and an amine, the equivalent ratio is the ratio of the equivalent of active hydrogen of amino groups to the sum of the equivalent of epoxy groups contained in the epoxy group-containing compound and the equivalent of (meth)acryloyl groups contained in the polyfunctional acrylate compound.

Moreover, when the binder is composed of an epoxy group-containing compound and a thiol, the equivalent ratio is the ratio of the equivalent of active hydrogen of thiol groups contained in the thiol to the equivalent of epoxy groups contained in the epoxy group-containing compound.

In addition, when the binder is composed of an epoxy group-containing compound, an amine, and a thiol, the equivalent ratio is the ratio of the sum of the equivalent of active hydrogen of thiol groups contained in the thiol and the equivalent of active hydrogen of amino groups contained in the amine to the equivalent of epoxy groups contained in the epoxy group-containing compound.

When the equivalent ratio of the above functional groups is 1.05 or more, the number of active hydrogen atoms of amino groups is suitable, and the reaction proceeds to a certain extent even in the initial stage of curing, and fast curability is readily obtained. When the equivalent ratio is 2.9 or less, the number of active hydrogen atoms of amino groups is not excessive, the compressive load at the initial stage of curing is lowered, and the pot life is readily extended. Regulating the equivalent ratio to the above predetermined ranges enables adhesion to be readily regulated to a suitable range.

The equivalent ratio of the above functional groups is more preferably 1.2 or more, even more preferably 1.3 or more, and yet more preferably 1.4 or more, and is more preferably 2.6 or less, even more preferably 2.1 or less, and yet more preferably 1.8 or less.

The equivalent of epoxy groups can be obtained by dividing the content (g) of the epoxy resin contained in the curable composition by the epoxy equivalent (g/eq). Note that when two or more kinds of epoxy resin are contained, the equivalent of epoxy groups can be obtained by summing the values obtained by dividing the content (g) of each epoxy resin by the epoxy equivalent (g/eq).

The equivalent of active hydrogen of amino groups can be obtained by dividing the amine content (g) in the curable composition by the active hydrogen equivalent (g/eq) of amine. Note that when two or more kinds of amine are contained, the equivalent of active hydrogen can be obtained by summing the values obtained by dividing the content (g) of each amine by the active hydrogen equivalent (g/eq).

Moreover, the equivalent of the (meth)acryloyl group can be obtained by dividing the content (g) of the acrylate compound contained in the curable composition by the (meth)acryloyl equivalent (g/eq). Note that, when two or more kinds of acrylate compounds are contained, the equivalent can be obtained by summing the values obtained by dividing the content (g) of each acrylate compound by the (meth)acryloyl equivalent (g/eq).

The epoxy equivalent (g/eq) can be obtained by dividing the molecular weight of the epoxy resin by the number of epoxy groups per molecule. The active hydrogen equivalent (g/eq) can be obtained by dividing the molecular weight of amine by the number of active hydrogen atoms per molecule. Moreover, the (meth)acryloyl equivalent (g/eq) can be obtained by dividing the molecular weight of the acrylate compound by the number of (meth)acryloyl groups per molecule.

The equivalent of active hydrogen of thiol groups is, for example, a value obtained by multiplying the amount (mol/g) of active hydrogen per unit amount of thiol in the adhesive by the thiol content. Note that, when two or more kinds of thiols are contained, the equivalent of active hydrogen is obtained by summing the values obtained by multiplying the amount (mol/g) of active hydrogen per unit amount of each thiol by the content of each thiol.

When both an amine and a thiol are contained, the equivalent of active hydrogen of amino groups and thiol groups is the sum of the equivalent of active hydrogen of amino groups and the equivalent of active hydrogen of thiol groups in the adhesive.

The molecular weight, the equivalent of epoxy groups, the equivalent of active hydrogen, and the number of (meth)acryloyl groups can be measured using a mass spectrometer (GC-MS or LC-MS). When only the molecular weight can be determined using a mass spectrometer, the number (equivalent) of epoxy groups and the number (equivalent) of active hydrogen atoms per molecule can be determined using NMR (such as ¹H NMR) or the like. Note that, when the sample is a mixture, NMR is preferably performed after the components are separated by GPC (gel permeation chromatography) or HPLC (high performance liquid chromatography). When the structural formula of the epoxy resin is known, the molecular weight and the number of epoxy groups are the molecular weight and the number of epoxy groups of the epoxy resin that can be calculated from the structural formula, respectively. Also, when the structural formula of the amine is known, the molecular weight and the number of active hydrogen atoms are the molecular weight and the number of active hydrogen atoms of the amine that can be calculated from the structural formula, respectively. The same also applies to the acrylate compound. The same also applies to thiol.

The number of active hydrogen atoms in the amine shall be 1 in NHR₂ (secondary amino group) and 2 in NH₂R (primary amino group) (provided that, in NHR₂ and NH₂R, R is a functional group other than active hydrogen, i.e., a part of the amine other than NH or NH₂).

The number of active hydrogen atoms of thiol is 1 in SHR (wherein R is a functional group other than active hydrogen, i.e., a portion of thiol other than SH).

The content of the binder in the adhesive is preferably 8% by volume or more and 55% by volume or less based on the total volume of the adhesive. When the content is at the lower limit or above, the thermally conductive filler can be suitably dispersed in the thermally conductive member and the adhesive. Also, the viscosity of the adhesive can be prevented from becoming unnecessarily high. When the content is at the upper limit or below, a certain amount or more of the thermally conductive filler is readily contained in the adhesive. The content of the binder in the adhesive is more preferably 15% by volume or more and 45% by volume or less, and even more preferably 18% by volume or more and 38% by volume or less.

### [Thermally conductive filler]

The adhesive of the present invention contains a thermally conductive filler. Due to the thermally conductive filler contained in the adhesive, the thermal conductivity of the thermally conductive member formed from the adhesive is enhanced.

Examples of the thermally conductive filler include metals, metal oxides, metal nitrides, metal hydroxides, carbon materials, and non-metal oxides, nitrides, and carbides. The form of the thermally conductive filler may be spherical or a powder having an indefinite shape.

Examples of metals in the thermally conductive filler include aluminum, copper, and nickel, examples of metal oxides include aluminum oxide represented by alumina, magnesium oxide, and zinc oxide, and examples of metal nitrides include aluminum nitride. The metal hydroxide may be aluminum hydroxide. The carbon material may be nodular graphite. Examples of non-metal oxides, nitrides, and carbides include quartz, boron nitride, and silicon carbide. Among these, aluminum oxide is preferable from the viewpoint of enhancing the heat dissipating properties of the thermally conductive member, and aluminum hydroxide is preferable when enhancing flame retardancy. Aluminum oxide and aluminum hydroxide are also preferably used in combination.

One thermally conductive filler may be used singly, or two or more may be used in combination.

The average particle size of the thermally conductive filler is preferably 0.1 µm or more and 200 µm or less, more preferably 0.5 µm or more and 150 µm or less, and even more preferably 1 µm or more and 110 µm or less.

The thermally conductive filler is preferably a combination of a small particle size thermally conductive filler having an average particle size of 0.1 µm or more and 5 µm or less and a large particle size thermally conductive filler having an average particle size of more than 5 µm and 200 µm or less. By using thermally conductive fillers having different average particle sizes, the filling rate can be increased.

The average particle size of thermally conductive fillers can be measured by observation under an electron microscope or the like. More specifically, for example, the particle sizes of randomly selected 50 thermally conductive filler particles are measured using an electron microscope or an optical microscope, and the average (arithmetic mean) thereof can be taken as the average particle size.

The content of the thermally conductive filler in the curable composition is preferably 40% by volume or more and 90% by volume or less based on the total volume of the adhesive. When the content of the thermally conductive filler is at the lower limit or above, a certain level of thermal conductivity can be imparted to the adhesive. By regulating the content of the thermally conductive filler to the above upper limit or below, the thermally conductive filler can be suitably dispersed in the thermally conductive member, and also the viscosity of the adhesive can be prevented from becoming unnecessarily high. In the present invention, by lowering the viscosity of the adhesive, the content of the thermally conductive filler is readily increased. The content of the thermally conductive filler in the adhesive is more preferably 50% by volume or more and 85% by volume or less, and even more preferably 60% by volume or more and 78% by volume or less.

The content of the thermally conductive filler in the curable composition, when expressed in part by mass, is preferably 150 parts by mass or more and 3000 parts by mass or less, more preferably 200 parts by mass or more and 2000 parts by mass or less, and even more preferably 300 parts by mass or more and 1000 parts by mass or less, based on 100 parts by mass of the binder.

### (Dispersant)

The curable composition of the present invention may contain a dispersant. The dispersant may be a polymer-based dispersant. The polymer-based dispersant may be a polymer compound having a functional group. Examples of the polymer compound include acryl-based, vinyl-based, polyester-based, polyurethane-based, polyether-based, epoxy-based, polystyrene-based, amino-based, and silicone-based compounds. Examples of the functional group include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. A dispersant that is not a polymer dispersant may also be used and, for example, an alkoxysilane compound may also be used.

The content of the dispersant in the adhesive is preferably 0.1 parts by mass or more and 10 parts by mass or less, more preferably 0.2 parts by mass or more and 5 parts by mass or less, and even more preferably 0.4 parts by mass or more and 3 parts by mass or less, based on 100 parts by mass of the binder.

### (Water)

The curable composition of the present invention may contain water. When the adhesive contains water, water functions as a catalyst and facilitates the reaction between the base resin and the curing agent or, in particular, the reaction between the acryl-based compound and the amine.

The water content is preferably 0.1% by mass or more and 3.0% by mass or less based on the total amount of the curable composition. When the water content is 0.3% by mass or more, water can suitably promote the reaction between the base resin and the curing agent. When the water content is 2.0% by mass or less, problems, such as impaired physical properties of the cured product of the adhesive due to an excessive amount of water or a shortened pot life resulting from excessively progressed curing due to water, unlikely occur.

The water content is more preferably 0.3% by mass or more and 2.0% by mass or less, and more preferably 0.5% by mass or more and 1.5% by mass or less. When the adhesive contains water, the curing reaction readily proceeds even with a relatively small amount of the curing agent, and the gel point can appear relatively soon even with a relatively low equivalent ratio.

The water content in the curable composition can be determined by measurement using the Karl Fischer method.

### (Other additives)

The curable composition of the present invention may contain additives other than those described above, and examples of such additives include curing catalysts such as bisphenol F that catalyze the reaction between the base resin and the curing agent other than water, reaction rate control agents (reaction retardants) that suppress the reaction between the base resin and the curing agent, thixotropy imparting agents such as amides, flame retardants, plasticizers, antioxidants such as phenol-based antioxidants, and colorants.

When using a plasticizer, a plasticizer having a high molecular weight is preferably used, and a reactive plasticizer or a substantially non-volatile plasticizer is more preferably used.

### <Supply form>

The supply form of the adhesive of the present invention may be a one-component type or a two-component type in which a first agent and a second agent are combined, but the two-component type is preferable from the viewpoint of storage stability.

In a two-component adhesive, the volume ratio of the first agent to the second agent (second agent/first agent) is preferably 1 or a value close to 1 and, specifically, preferably 0.9 or more and 1.1 or less, and more preferably 0.95 or more and 1.05 or less. Thus, regulating the volume ratio of the first agent to the second agent to 1 or a value close to 1 facilitates the preparation of the adhesive.

In a two-component adhesive, preferably, the first agent and the second agent are both liquid at room temperature (25°C), and the compressive loads of the first agent and the second agent are the same, or even when the compressive loads are different, the difference between the compressive loads is small. Thus, regulating the compressive loads of the first agent and the second agent to mutually the same or close values facilitates the uniform mixing of the adhesive.

Specifically, the difference between the compressive load (N) of the first agent and the compressive load (N) of the second agent is preferably 450 N or less, more preferably 250 N or less, and even more preferably 50 N or less. The method for measuring the compressive load is as shown in the Examples.

More specifically, in a two-component adhesive, the first agent may contain the base resin of a binder, and the second agent may contain a curing agent for the binder. A curing agent that cures when mixed with the first agent is preferably used. Below, a representative configuration of a two-component adhesive wherein an epoxy-based binder is used will now be described in detail.

In a two-component adhesive, the first agent contains a base resin and does not have to contain a curing agent. On the other hand, the second agent contains a curing agent and does not have to contain a base resin. Note that the second agent may contain a base resin as long as it does not react with a curing agent.

The thermally conductive filler is contained in at least one of the first agent or the second agent, and is preferably contained in both the first agent and the second agent.

Accordingly, preferably, the first agent contains a base resin and a thermally conductive filler, and the second agent contains a curing agent and a thermally conductive filler. More preferably, the first agent does not contain a curing agent, and the second agent does not contain a base resin. Accordingly, even more preferably, the entirety of the base resin of the adhesive is contained in the first agent, and the entirety of the curing agent of the adhesive is contained in the second agent.

The thermally conductive filler is preferably contained in both the first agent and the second agent as described above and, in particular, is more preferably contained approximately equally in the first agent and the second agent. Specifically, the ratio (volume ratio) of the content of the thermally conductive filler in the second agent to the content of the thermally conductive filler in the first agent is preferably 0.67 or more and 1.5 or less, more preferably 0.83 or more and 1.2 or less, and even more preferably 0.91 or more and 1.1 or less. By approximately equally distributing the thermally conductive filler in the first agent and the second agent, the difference between the compressive loads of the first agent and the second agent is readily reduced, and the volume ratio of the first agent to the second agent is also readily brought close to 1.

The difference between the compressive loads of the first agent and the second agent can also be regulated by the viscosities of the epoxy group-containing compound and the curing agent, such as an amine, to be used. For example, specifically, when it is desired to lower the viscosity of the first agent containing an epoxy group-containing compound, a low-viscosity epoxy group-containing compound is used, or the content is increased. The viscosity may also be lowered by adding a dispersant or a plasticizer.

The first agent and the second agent may be readily mixed when their densities are close to each other, and the difference between their densities is preferably small. Specifically, the ratio of the density of the first agent to the density of the second agent (also referred to as a density ratio) is preferably 0.7 or more and 1.4 or less, more preferably 0.8 or more and 1.2 or less, and even more preferably 0.9 or more and 1.1 or less. To reduce the density ratio, the content of the thermally conductive filler in the first agent and the second agent may be regulated within the above range.

In a two-component type, the dispersant and other additives are contained in one or both of the first agent and the second agent as necessary. For example, when the thermally conductive filler is contained in both the first agent and the second agent, the dispersant may be contained in both the first agent and the second agent. Water may be contained in either the first agent or the second agent, but water is preferably contained in the second agent but not in the first agent.

In a two-component adhesive, the ratio of the functional group concentration (mol/g) of the second agent to the functional group concentration (mol/g) of the first agent is preferably 1.05 or more and 2.9 or less. By regulating the functional group concentrations of the first agent and the second agent to the above range, the base resin and the curing agent react in a suitable equivalent ratio when the first agent and the second agent are mixed in a volume ratio of 1:1, and thus the pot life is readily extended while ensuring fast curability.

The ratio of functional group concentrations is more preferably 1.2 or more, even more preferably 1.3 or more, and yet more preferably 1.4 or more, and is more preferably 2.6 or less, even more preferably 2.1 or less, and yet more preferably 1.8 or less.

The functional group concentration refers to the concentration of functional groups that are contained in the base resin or the curing agent and that can react with the curing agent or the base resin, the epoxy group is the functional group in the epoxy group-containing compound, and the number of epoxy groups per unit amount (g) is the functional group concentration. In an amine and a thiol, active hydrogen is the functional group, and the number of active hydrogen atoms per unit amount (g) is the functional group concentration.

For example, in a preferable aspect, the first agent contains an epoxy group-containing compound and a polyfunctional acrylate compound and contains neither an amine nor a thiol, and the second agent contains any of an amine and a thiol and contains neither an epoxy group-containing compound nor a polyfunctional acrylate compound. In this case, the total concentration of epoxy groups and (meth)acryloyl groups in the first agent is the functional group concentration of the first agent, and the concentration of active hydrogen of the amine and the thiol in the second agent is the functional group concentration of the second agent.

When the adhesive is a two-component type, the first agent and the second agent are preferably provided in separate containers, and specifically the first agent is provided in a first container, and the second agent is provided in a second container. The first container and the second container may be separate bodies, or may be integrated into a single body. Integrating the first container and the second container into a single body facilitate the supplying of the first container and the second container as a container set to the demand destination. Herein, the first container filled with the first agent and the second container filled with the second agent may be collectively referred to as a container set.

Examples of containers include, but are not limited to, syringes, cartridges, pail cans, and drums. For example, when filling a syringe with the adhesive, the syringe is preferably a dual barrel syringe. As shown in Fig, 1, a dual barrel syringe 30 has a first syringe 31 constituting a first container and a second syringe 32 constituting a second container that are parallelly integrated into a single body. A first agent 35 and a second agent 36 respectively provided in the syringes 31, 32 may be discharged from the syringes that serve as dispensers and mixed.

When using a cartridge, the container set may be composed of a first cartridge constituting the first container and a second cartridge constituting the second container, and such cartridges may be integrated into a single body. The cartridges may be usually attached to syringes (e.g., a first syringe and a second syringe) or the like, and the first agent delivered from the first cartridge and the second agent delivered from the second cartridge may be discharged from the respective outlets of the first syringe and the second syringe that serve as dispensers and mixed.

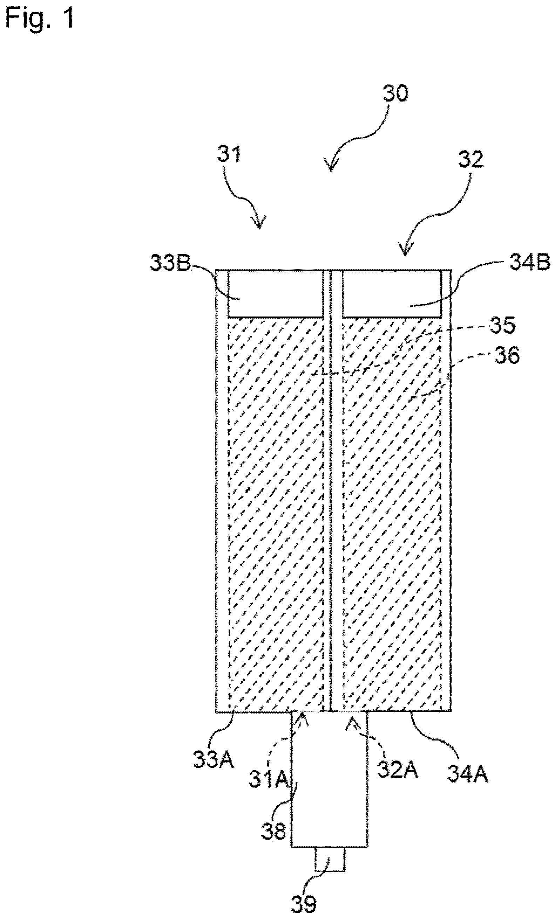

The first agent and the second agent may be mixed using a mixing apparatus such as a static mixer. For example, as shown in Fig. 1, a static mixer 38 may be connected to an outlet 31A of the first syringe 31 and an outlet 32A of the second syringe 32, and the first agent 35 and the second agent 36 discharged from the outlets 31A and 32A can be mixed inside the mixer 38. The mixture (curable composition) obtained by being mixed in the mixer 38 may be discharged from an outlet 39 of the mixer 38.

Each of the syringes 31, 32 may have a structure in which the openings of barrels 33A, 34A respectively filled with the first agent 35 and the second agent 36 are closed by lids 33B, 34B. Concerning the syringe 30 shown in Fig. 1, the first agent 35 and the second agent 36 after the lids 33B, 34B are removed may be respectively discharged from the outlets 31A, 32A by being pushed by plungers (not shown) inserted through the openings.

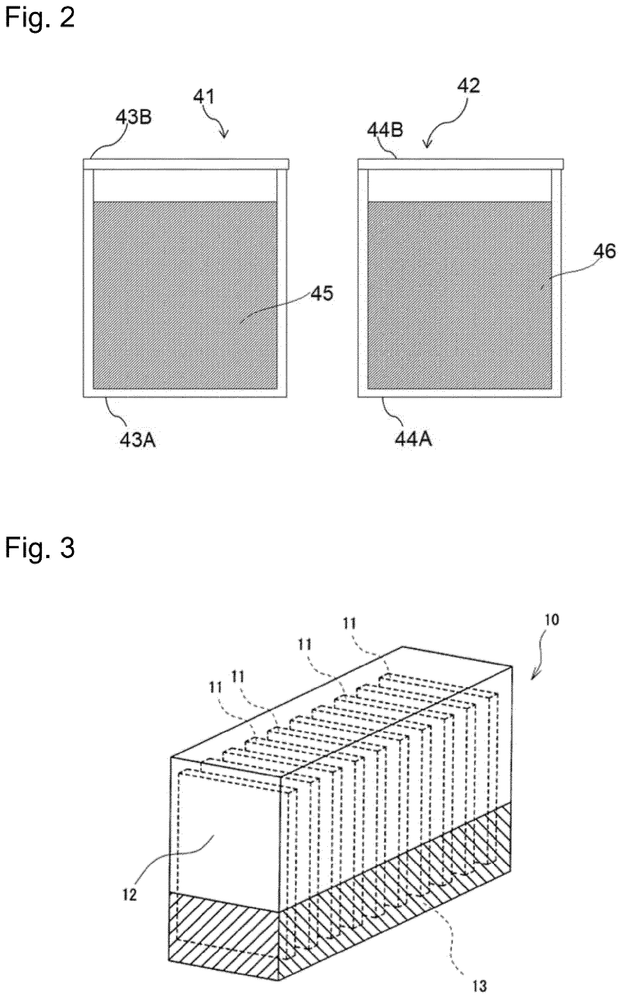

When using pail cans, the container set may include a first pail can 41 that constitutes the first container and is filled with a first agent 45 and a second pail can 42 that constitutes the second container and is filled with a second agent 46 as shown in Fig. 2. For example, the pail cans 41, 42 respectively include container bodies 43A, 44A that are filled with the first agent 45 and the second agent 46, respectively, and have openings, and lids 43B, 44B for closing the openings of the container bodies 43A, 44A, respectively.

### (Method for preparing adhesive)

When the adhesive of the present invention is a two-component type, the first agent and the second agent may be obtained by mixing the components constituting the first agent and the second agent, respectively. Similarly, the adhesive when being a one-component type may be obtained by mixing the components constituting the adhesive. The method for mixing the components is not particularly limited, and, for example, the adhesive may be prepared by adding an optionally used thermally conductive filler and, moreover, optionally used additives such as a dispersant to a binder, and then stirring or kneading the mixture.

The thermally conductive filler may also be surface-treated with a dispersant before being mixed with the binder. By being surface-treated with a dispersant in advance, the thermally conductive filler has a surface that is modified with the dispersant in advance. The thermally conductive filler that is surface-modified in advance may then be mixed with the binder to prepare the adhesive.

The method for treating the surface with a dispersant in advance is not particularly limited, and a known method can be used such as a wet treatment method or a dry treatment method. In the wet treatment method, for example, the thermally conductive filler may be added to and mixed with a treatment liquid in which the dispersant is dispersed or dissolved in a solvent, and then the mixture may be dried, thermally treated, washed, or the like to cause the dispersant to be bonded or attached to the surface of the thermally conductive filler. The dry treatment method is a surface treatment method that does not involve a dispersion medium, and, specifically, the thermally conductive filler is added to the dispersant, and the mixture is stirred by a mixer or the like and then thermally treated to cause the dispersant to be bonded or attached to the surface of the thermally conductive filler.

### [Thermally conductive member]

The adhesive of the present invention may be used as a thermally conductive member. The adhesive of the present invention becomes a thermally conductive member by being cured. The thermally conductive member of the present invention contains a polymer matrix and a thermally conductive filler. The polymer matrix is obtained by curing a binder, and the thermally conductive filler is dispersed within the polymer matrix and retained by the polymer matrix. Accordingly, for example, when the binder is an epoxy-based binder, the polymer matrix is composed of a cured product of an epoxy resin.

The thermally conductive member may be used by being disposed between two components such as a heating element and a heat dissipating element. Examples of the heating element include electronic parts that produce heat, such as a battery. Examples of the heat dissipating element include housings and cooling members such as a heat sink and a cooling plate.

The details of the thermally conductive filler in the thermally conductive filler are the same as those of the thermally conductive filler in the adhesive, and the description thereof is thus omitted. The details of the binder for forming the polymer matrix are also the same as those of the binder in the adhesive, and the description thereof is thus omitted. The same also applies to the dispersant and other additives.

Note that the content of the binder and the content of the thermally conductive filler above are described as being based on the total volume of the adhesive, and since the thermally conductive member is formed from the adhesive, the above contents based on the total volume of the adhesive can be regarded as the contents based on the total volume of the thermally conductive member in the thermally conductive member.

### [Applications]

The adhesive and the thermally conductive member of the present invention can be used in a variety of applications, for example, can be used for various electronic device applications, exemplified by battery assemblies such as lithium-ion battery (LiB) assemblies, power electronics, electronics packaging, LEDs, solar cells, and electrical grids. Among these, the adhesive and the thermally conductive member are preferably used in a battery assembly, and more preferably used in a LiB assembly. Accordingly, in a preferable embodiment of the present invention, a battery assembly provided with the above thermally conductive member is provided. The battery assembly such as a LiB assembly can be preferably used in automobiles.

In battery assembly applications, the adhesive or the thermally conductive member of the present invention is preferably used as a gap filler in a battery assembly. Also, the adhesive or the thermally conductive member of the present invention is, in one aspect, preferably used in a battery module, and more preferably used as a gap filler in a battery module. Below, an example in which the thermally conductive member of the present invention is applied to a battery module will now be described.

The battery module includes a gap filler composed of the thermally conductive member, a plurality of battery cells, and a module housing accommodating the battery cells, wherein the gap filler is disposed inside the module housing. The gap filler composed of the thermally conductive material is provided between the battery cells and between the battery cells and the module housing, and the provided gap filler tightly adheres to the battery cells and the module housing. Accordingly, the gap filler between the battery cells has a function of maintaining the separated state between the battery cells. Also, the gap filler between the battery cells and the module housing tightly adheres to both the battery cells and the module housing, and functions to transfer heat produced by the battery cells to the module housing.

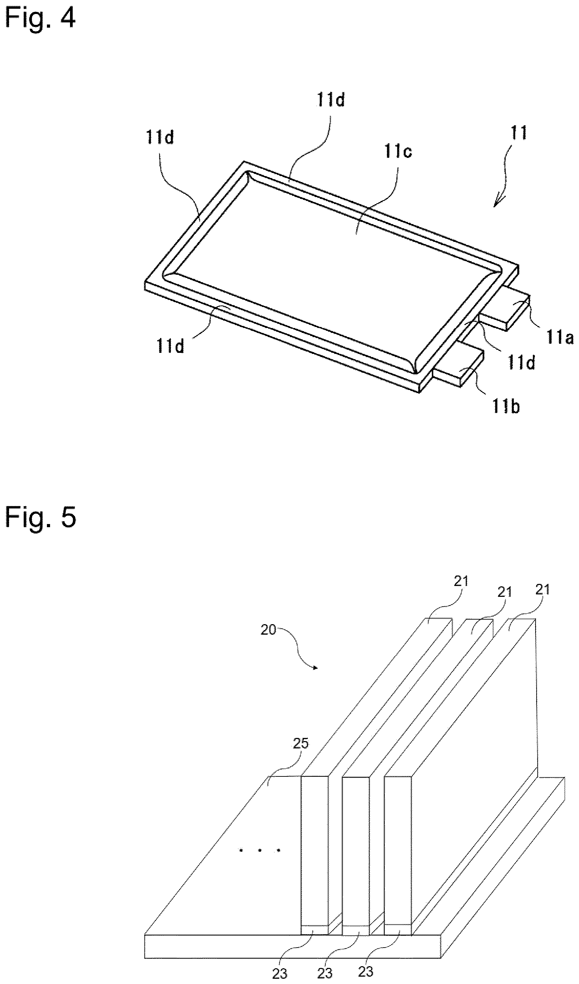

Fig. 3 shows a specific configuration of a battery module. Fig. 4 shows a specific configuration of each battery cell. As shown in Fig. 3, a plurality of battery cells 11 are disposed inside a battery module 10. Each battery cell 11 is laminated with a flexible exterior film and encapsulated inside it, and the overall shape is a flat body that has a small thickness in relation to the height and width. As shown in Fig. 4, the battery cell 11 is formed such that a positive electrode 11a and a negative electrode 11b are exposed outside, and a central part 11c of the flat surface is thicker than a crimped edge 11d.

As shown in Fig. 3, the battery cells 11 are disposed such that their flat surfaces face each other. In the configuration of Fig. 3, the gap filler 13 is provided not to cover the entirety of the battery cells 11 accommodated inside the module housing 12. The gap filler 13 is provided so as to fill the gaps present in a portion (bottom part) inside the module housing 12. The gap filler 13 is provided between the battery cells 11 and between the battery cells 11 and the module housing 12, and tightly adheres to these portions of the surfaces of the battery cells 11 and the inner surface of the module housing 12.

The gap filler 13 provided between the battery cells 11 adheres to the surfaces of the battery cells 11, the gap filler 13 itself has suitable elasticity and flexibility, and thus even when external force that displaces the space between the battery cells 11 is applied, the gap filler 13 can mitigate strain/deformation caused by the external force. Accordingly, the gap filler 13 has a function of maintaining the separated state between the battery cells 11.

The gap filler 13 provided in a gap between the battery cells 11 and the inner surface of the module housing 12 also tightly adheres to the surfaces of the battery cells 11 and the inner surface of the module housing 12. As a result, heat produced inside the battery cells 11 is transferred via the gap filler 13 adhering to the surfaces of the battery cells 11 to the inner surface of the module housing 12 to which the other surface of the gap filler 13 tightly adheres.

The gap filler 13 can be formed in the battery module 10 by applying a liquid adhesive using a commonly used dispenser and then curing the liquid adhesive. Since the adhesive of the present invention has a low viscosity as described above, the workability during the formation of the gap filler 13 is enhanced.

When forming the gap filler 13, the two-component adhesive described above is preferably used. The two-component adhesive is easy to store, is unlikely cured when applied using a dispenser when mixed immediately before use, and can promptly be cured after being applied. Also, application using a dispenser is preferable also in that the liquid adhesive can reach relatively deep inside the housing 12 of the battery module 10.

The gap filler 13 for covering the battery cells 11 preferably covers 20 to 40% of each battery cell 11 on one side of the battery cell 11. With a coverage of 20% or more, the battery cells 11 can be stably retained. Also, by sufficiently covering battery cells that produce a large amount of heat, heat dissipation efficiency is enhanced. On the other hand, with a coverage of 40% or less, heat produced from the battery cells 11 can be efficiently dissipated, and a weight increase, deterioration of workability, and the like can also be prevented. To enhance heat dissipation efficiency, it is preferable to cover the side of the battery cells 11 on which there are the electrodes 11a, 11b with the gap filler 13, and more preferable to cover the entirety of the electrodes 11a, 11b with the gap filler 13. As described above, the battery module 10 can cause heat produced from the battery cells 11 to escape to the module housing 12 via the gap filler 13.

The gap filler 13 is also preferably used in a battery pack including a plurality of battery modules 10 inside. A battery pack generally includes the battery modules 10 and a battery pack housing accommodating the battery modules 10. In the battery pack, the gap filler 13 can be provided between the battery modules 10 and the battery pack housing. Accordingly, heat that has escaped to the module housing 12 as described above can further escape to the battery pack housing, thus enabling effective heat dissipation.

While the battery assembly has been described so far in reference to a battery module or a battery pack including a battery module as an example, the present invention may be applied to a battery assembly having no battery module, and is also preferably applied to, for example, a battery assembly having a cell-to-pack structure.

Fig. 5 shows a schematic diagram of a battery assembly having a cell-to-pack structure. A battery assembly 20 having a cell-to-pack structure includes a plurality of battery cells 21 and a battery pack housing, and the battery cells 21 are bonded to a base member 25 constituting the battery pack housing via a gap filler 23 composed of a thermally conductive member (a cured product of the adhesive). The base member 25 may constitute a cooling plate or the like. The gap filler 23 in the battery assembly 20 may be formed in the same manner as the formation of the gap filler 13 in the above battery module using, for example, a commonly used dispenser. Since the adhesive of the present invention has a low viscosity, the workability during the formation of the gap filler 23 is also enhanced. The adhesive of the present invention enables the compressive load at the initial stage of curing to be lowered and the pot time to be extended while having fast curability and, accordingly, the battery cells 21 can be adhered to the base member 25 with high workability even in a battery assembly having a cell-to-pack structure.

### Examples

Below, the present invention will now be described in more detail by way of Examples, but the present invention is not limited to the Examples in any way.

### [Thermal conductivity]

The thermal conductivities of the first agent and the second agent of the adhesive were determined by a method involving measuring thermal resistance using a measuring device in accordance with ASTM D5470-06.

Specifically, the adhesive was applied in an excessive amount so as to be larger than the thickness at the time of measurement such that the measurement die that served as a heating element was covered, then sandwiched with the heat dissipating element, and compressed with a load of 30 psi until the thickness of the adhesive became 1.0 mm, 1.5 mm, and 2.0 mm, and the thermal resistances at these thicknesses were measured. The thickness can be regulated by a spacer. A graph depicting these three thermal resistance values was created, with the horizontal axis representing thickness and the vertical axis representing thermal resistance, and the least squares method was used to obtain an approximate straight line for the three points. The inclination of the approximate straight line was defined as thermal conductivity.

The measurement of thermal resistance was performed at 80°C using LW-9389 manufactured by Long Win Science and Technology Corporation. The area of the measurement die was 1 inch × 1 inch.

### [Compressive load]

First, 2 g of an adhesive prepared according to the formulation was placed on aluminum foil having a size of 50 mm × 50 mm × thickness 12 µm, wrapped in the aluminum foil, and placed in a thermostatic chamber at 35°C for 6 minutes to give a measurement sample. Then, a jig was pressed against a measurement point such that the load value was 3.6 kg without the sample being placed, and a point 10 mm away from the measurement point was set as a measurement start position (zero point). The compressive load of the measurement sample was measured under the conditions shown below. The first agent and the second agent were also measured in the same manner.
Test speed: 60 mm/sec
Jig size: 3 cmφ
Result read value: the result at a displacement of 8.80 mm was taken as the compression load value.
Test environment: 25°C, 50% RH

The resulting compression load value was used to make evaluations on a four-point scale as follows. Note that the compression load indicates the compression load at the initial stage of curing, and with a lower value, temporary bonding tends to be easier, and the pot life tends to be longer.

### (Evaluation criteria)

AA: 500 N or less
A: 800 N or less
B: More than 800 N and 1000 N or less
C: More than 1000 N and 1500N or less
D: More than 1500 N

### [Adhesion (after 1 hour)]

The adhesion (after 1 hour) of the cured product of the adhesive at 18°C was measured by the following method in accordance with DIN EN 1465. First, two PET plates (trade name "PET-6010", manufactured by C.I. TAKIRON Corporation) each having a width of 25 mm, a length of 100 mm, and a thickness of 2 mm were provided. The adhesive was then applied to the longitudinal end of one plate over the entire width of the plate to a length of 5 mm such that the thickness after curing was 1 mm. Then, the longitudinal end of another plate was placed on top of the applied adhesive, and the plates were left to stand in this state in an environment having 18°C and 50% RH for 1 hour to cure the adhesive and give a measurement sample. The measurement sample was formed such that two PET plates overlapped each other across the entire width over a length of only 5 mm, and the films were bonded together at the overlapping portion via the cured product of the adhesive (size: 25 mm × 5 mm, thickness 1 mm) and had a width of 25 mm and a length of 195 mm.

### [Adhesion (after 18 hours)]

Adhesion (after 18 hours) was measured in the same manner as the measurement of adhesion (after 1 hour) except that the adhesive was left to stand for 18 hours after being applied.

### [Gel time]

The elastic moduli G' and G" of a sample obtained by mixing the first agent and the second agent were measured with a rheometer. Specifically, the changes of the elastic moduli G' and G" of each sample were continuously measured for 120 minutes using the MCR-302e rheometer manufactured by Anton Paar while applying a strain at a frequency of 1 Hz at 25°C using a Peltier plate. The time from the beginning of the measurement to the gel point at which the modulus G' (storage elastic modulus) and the modulus G" (loss elastic modulus) were equal was defined as the gel time. The measurement was performed immediately after mixing the first agent and the second agent.

### [Elastic modulus G' (after 15 minutes)]

The elastic modulus G' was measured using the MCR-302e rheometer manufactured by Anton Paar while applying a strain at a frequency of 1 Hz at 25°C using the above Peltier plate, and the elastic modulus G' at 15 minutes after the beginning of measurement was recorded. The measurement method and conditions were the same as those for the above gel time.

### [Elastic modulus G" (after 15 minutes)]

The elastic modulus G" was measured using the MCR-302e rheometer manufactured by Anton Paar while applying a strain at a frequency of 1 Hz at 25°C using a Peltier plate, and the elastic modulus G" at 15 minutes after the beginning of measurement was recorded. The measurement method and conditions were the same as those for the above gel time.

### [Storage elastic modulus (after 60 minutes)]

The elastic modulus G' was measured using the MCR-302e rheometer manufactured by Anton Paar while applying a strain at a frequency of 1 Hz at 25°C using a Peltier plate, and the elastic modulus G' at 60 minutes after the beginning of measurement was recorded. The measurement method and conditions were the same as those for the above gel time.

### [Examples 1 to 6 and Comparative Examples 1 to 3]

According to the formulations in Tables 1 and 2, the components were mixed to prepare the first agent and the second agent. The prepared first and second agents were added to a dual-barrel cartridge wherein each barrel had a volume of 50 cc, and mixed at room temperature in a volume ratio of 1:1 using a static mixer to give an adhesive. The physical property values of the resulting adhesive were determined, and evaluation tests were also carried out.

The components used in the Examples and Comparative Examples were as follows.

### (Epoxy group-containing compound)

Bisphenol F type epoxy resin: trade name "jER 806", manufactured by Mitsubishi Chemical Corporation, epoxy equivalent 165 g/eq, molecular weight 330, viscosity (25°C) 2000 mPa·s (catalog value)
Polyfunctional epoxy resin: trade name "EX-321", manufactured by Nagase ChemteX Corporation, molecular weight 280, epoxy equivalent 140 g/eq, viscosity (25°C) 130 mPa·s (catalog value), trimethylolpropane polyglycidyl ether
Monofunctional epoxy resin: aliphatic glycidyl ether (C₁₂₋₁₄ aliphatic alcohol), trade name "Epogosey ML", manufactured by Yokkaichi Chemical Co., Ltd., epoxy equivalent 282 g/eq, number of functional groups 1, molecular weight 282
Glycidyl ether: trade name "Denacol EX 146", manufactured by Nagase ChemteX Corporation, molecular weight 225, 4-t-butylphenyl glycidyl ether, epoxy equivalent 225 g/eq

### (Polyfunctional acrylate compound)

Dipentaerythritol hexaacrylate: trade name "DPHA", manufactured by DAICEL-ALLNEX LTD., molecular weight 520

### (Amine curing agent)

Trimethylolpropane poly(oxypropylene) triamine: trade name "T-403", manufactured by HUNTSMAN, molecular weight 440, viscosity (25°C) 0.7 Pa·s (catalog value), active hydrogen equivalent 73.3 g/eq
Poly(oxypropylene)diamine: trade name "D-230", manufactured by HUNTSMAN, molecular weight 230, viscosity (25°C) 0.1 Pa·s (catalog value)
Poly(oxypropylene)diamine: trade name "D-400", manufactured by HUNTSMAN, molecular weight 430, active hydrogen equivalent 107.5 g/eq, viscosity (25°C) 0.3 Pa·s

### (catalog value)

Polyamidoamine: trade name "ancamide 506", manufactured by EVONIK, active hydrogen equivalent 110 g/eq, viscosity (25°C) 0.3 Pa·s,
Phenalkamine-type Mannich base: trade name "NC-540", manufactured by Cardolite Japan, active hydrogen equivalent 85 g/eq, viscosity (25°C) 2 Pa·s
Amidoamine: trade name "TD-960", manufactured by DIC Corporation, active hydrogen equivalent 77 g/eq, viscosity (25°C) 75 Pa·s (catalog value)

### (Thixotropy imparting agent)

Amide powder: trade name "6650" manufactured by Kusumoto Chemicals Ltd.

### (Dispersant)

Polymer-based dispersant (acidic group-containing copolymer)

### (Thermally conductive filler)

Aluminum hydroxide 1: Average particle size: 1 µm
Aluminum hydroxide 2: Average particle size: 10 µm
Aluminum hydroxide 3: Average particle size: 50 µm
Aluminum hydroxide 4: Average particle size: 105 µm

### (Catalyst)

Bisphenol F: trade name "Bisphenol F", manufactured by Honshu Chemical Industry Co., Ltd.
Pure water

**[Table 1]**

| | | | Example 1 | | Example 2 | | Example 3 | | Example 4 | | Example 5 | |
|---|---|---|---|---|---|---|---|---|---|---|---|---|
| | | | First agent | Second agent | First agent | Second agent | First agent | Second agent | First agent | Second agent | First agent | Second agent |
| | Epoxy group-containing compound | jER806 | 6.4 | | 6.4 | | 6.4 | | 6.4 | | 10.18 | |
| | | EX-321 | 1.65 | | 1.65 | | 1.65 | | 1.65 | | | |
| | | Epogosey ML | | | | | | | | | 207 | |
| | | EX146 | 3.6 | | 3.6 | | 3.6 | | 3.6 | | 3.6 | |
| | Polyfunctional acrylate compound | DPHA | 4.2 | | 4.2 | | 4.2 | | 4.2 | | 4 | |
| | Amine | T-403 | | 11.7 | | 13.6 | | | | | | 8 |
| | | D-230 | | | | | | 6.8 | | | | |
| | | D-400 | | 1.9 | | | | | | 6.8 | | |
| Formulation (part by mass) | | ancamide506 | | | | | | 6.8 | | 6.8 | | |
| | | NC-540 | | | | | | | | | | 8 |
| | | TD960 | | | | | | | | | | |
| | Thixotropy imparting agent | 6650 | 0.2 | 0.2 | 0.2 | 0.2 | 0.2 | 0.2 | 0.2 | 0.2 | 0.2 | 0.2 |
| | Dispersant | Polymer-based dispersant | 0.1 | 0.1 | 0.1 | 0.1 | 0.1 | 0.1 | 0.1 | 0.1 | 0.1 | 0.09 |
| | Thermally conductive filler | Aluminum hydroxide 1 | 129 | 13.4 | 12.9 | 13.4 | 12.9 | 13.4 | 12.9 | 13.4 | 12.5 | 13.13 |
| | | Aluminum hydroxide 2 | 17.3 | 17.5 | 17.3 | 17.5 | 17.3 | 17.5 | 17.3 | 17.5 | 16.89 | 17.71 |
| | | Aluminum hydroxide 3 | 17.3 | 17.5 | 17.3 | 17.5 | 17.3 | 17.5 | 17.3 | 17.5 | 16.89 | 17.71 |
| | | Aluminum hydroxide 4 | 34.7 | 35.0 | 34.7 | 35.0 | 34.7 | 35.0 | 34.7 | 35.0 | 33.84 | 35.4 |
| | Catalyst | Bisphenol F | 1.85 | 1.85 | 1.85 | 1.85 | 1.85 | 1.85 | 1.85 | 1.85 | | |
| | | Pure water | | 1 | | 1 | | 1 | | 1 | | |
| | Functional group content (mmol/g) | | 0.112 | 0.170 | 0.112 | 0.179 | 0.112 | 0.128 | 0.112 | 0.121 | 0.129 | 0.199 |
| | Mixing ratio of first agent to second agent (mass ratio) | | 1 ; 1 | | 1 ; 1 | | 1 ; 1 | | 1 ; 1 | | 1:1 | |
| | Acrylate content (% by mass) | | 2.1 | | 2.1 | | 2.1 | | 2.1 | | 2.0 | |
| | Amine content (% by mass) | | 6.8 | | 6.8 | | 6.8 | | 6.8 | | 8.0 | |
| | Filling factor of thermally conductive filler (% by volume) | | 70.5 | 70.5 | 70.5 | 70.5 | 70.5 | 70.5 | 70.5 | 70.5 | 70.5 | 70.5 |
| | Number of acryl functional groups/number of epoxy functional groups | | 0.77 | | 0.77 | | 0.77 | | 0.77 | | 0.56 | |
| | Equivalent ratio when first agent and second agent was mixed in mass ratio of 1:1 | | 1.52 | | 1.60 | | 1.14 | | 1.08 | | 1.54 | |
| | Thermal conductivity (W/(m·k)) | | 1.7 | | 1.7 | | 1.7 | | 1.7 | | 1.7 | |
| | Compressive load | Single agent (N, before mixing) | 623 | 342 | 623 | 383 | 623 | 203 | 623 | 471 | 158 | 207 |
| Physical property value | | After mixing (N) | 724 | | 497 | | 586 | | 553 | | 1844 | |
| | | Overall evaluation | A | | AA | | A | | A | | C | |
| | Difference between compressive loads | (N) | 281 | | 240 | | 420 | | 152 | | 49 | |
| | Adhesion (MPa) | After 1 hour | 0.32 | | 0.30 | | 0.12 | | 0.11 | | 0.18 | |
| | | After 18 hours | 1.32 | | 1.67 | | 1.00 | | 1.00 | | 1.28 | |
| | Rheometer measurement | Gel time (min) | 25 | | 28 | | 18 | | 18 | | 5 | |
| | | Elastic modulus G' (Pa, after 15 minutes) | 2.44×10³ | | 4.7×10³ | | 1.18×10³ | | 1.22×10⁴ | | 1.54×10⁶ | |
| | | Elastic modulus G" (Pa, after 15 minutes) | 7.67×10³ | | 1.3×10⁴ | | 2.93×10³ | | 2.36×10⁴ | | 1.84×10⁵ | |
| | | Storage elastic modulus (Pa, after 60 minutes) | 2.19×10⁶ | | 2.19×10⁶ | | 9.50×10⁵ | | 1.87×10⁶ | | 3.64×10⁶ | |

**[Table 2]**

| | | | Example 6 | | Comparative Example 1 | | Comparative Example 2 | | Comparative Example 3 | |
|---|---|---|---|---|---|---|---|---|---|---|
| | | | First agent | Second agent | First agent | Second agent | First agent | Second agent | First agent | Second agent |
| | Epoxy group-containing compound | jER806 | 10.18 | | 6.4 | | 6.4 | | 6.4 | |
| | | EX-321 | | | 1.65 | | 1.65 | | 1.65 | |
| | | Epogosey ML | 2.07 | | | | | | | |
| | | EX146 | 3.6 | | 3.6 | | 3.6 | | 3.6 | |
| | Polyfunctional acrylate compound | DPHA | 4 | | 4.2 | | 4.2 | | 4.2 | |
| | Amine | T-403 | | 4 | | | | | | |
| | | D-230 | | | | | | | | 13.6 |
| | | D-400 | | | | | | 13.6 | | |
| Formulation (part by mass) | | ancamide506 | | | | | | | | |
| | | NC-540 | | | | | | | | |
| | | TD960 | | | | 13.6 | | | | |
| | Thixotropy imparting agent | 6650 | 0.2 | 0.2 | 0.2 | 0.2 | 0.2 | 0.2 | 0.2 | 0.2 |
| | Dispersant | Polymer-based dispersant | 0.1 | 0.09 | 0.1 | 0.1 | 0.1 | 0.1 | 0.1 | 0.1 |
| | Therm ally conductive filler | Aluminum hydroxide 1 | 12.5 | 13.13 | 12.9 | 13.4 | 12.9 | 13.4 | 12.9 | 13.4 |
| | | Aluminum hydroxide 2 | 16.89 | 17.71 | 17.3 | 17.5 | 17.3 | 17.5 | 17.3 | 17.5 |
| | | Aluminum hydroxide 3 | 16.89 | 17.71 | 17.3 | 17.5 | 17.3 | 17.5 | 17.3 | 17.5 |
| | | Aluminum hydroxide 4 | 33.84 | 35.4 | 34.7 | 35.0 | 34.7 | 35.0 | 34.7 | 35.0 |
| | Catalyst | Bisphenol F | | | 1.85 | 1.85 | 1.85 | 1.85 | 1.85 | 1.85 |
| | | Pure water | | | | 1 | | 1 | | 1 |
| | Functional group content (mmol/g) | | 0.129 | 0.194 | 0.112 | 0.177 | 0.112 | 0.118 | 0.112 | 0.132 |
| | Mixing ratio of first agent to second agent (mass ratio) | | 1 : 1 | | 1:1 | | 1 : 1 | | 1 : 1 | |
| | Acrylate content (% by mass) | | 2.0 | | 2.1 | | 2.1 | | 2.1 | |
| | Amine content (% by mass) | | 8.0 | | 6.8 | | 6.8 | | 6.8 | |
| | Filling factor of thermally conductive filler (% by volume) | | 70.5 | 70.5 | 70.5 | 70.5 | 70.5 | 70.5 | 70.5 | 70.5 |
| | Number of acryl functional groups/number of epoxy functional groups | | 0.56 | | 0.77 | | 0.77 | | 0.77 | |
| | Equivalent ratio when first agent and second agent was mixed in mass ratio of 1:1 | | 1.50 | | 1.57 | | 1.05 | | 1.18 | |
| | Thermal conductivity (W/(m·k)) | | 1.7 | | 1.7 | | 1.7 | | 1.7 | |
| Physical property value | Compressive load | Single agent (N, before mixing) | 158 | 200 | 623 | Not measurable | 623 | 164 | 623 | 81 |
| | | After mixing (N) | 432 | | 2074 | | 352 | | 299 | |
| | | Overall evaluation | AA | | D | | AA | | AA | |
| | Difference between compressive loads | (N) | 42 | | - | | 459 | | 542 | |
| | Adhesion (MPa) | After 1 hour | 0.1 | | 0.15 | | 0 | | 0 | |
| | | After 18 hours | 1 | | 0.27 | | 0.80 | | 0.09 | |
| | Rheometer measurement | Gel time (min) | 12 | | 2 | | 160 | | 39 | |
| | | Elastic modulus G' (Pa, after 15 minutes) | 1.31×10⁵ | | 1.05×10⁷ | | 5.54×10² | | 1.78×10³ | |
| | | Elastic modulus G" (Pa, after 15 minutes) | 3.92×10⁴ | | 1.17×10⁶ | | 9.16×10² | | 3.83×10³ | |
| | | Storage elastic modulus (Pa, after 60 minutes) | 2.09×10⁶ | | 1.6×10⁷ | | 7.38×10⁵ | | 3.72×10³ | |

As is clear from the above Examples, curable thermally conductive adhesives that satisfied the requirements of the present invention had a suitable gel time, and were able to exhibit sufficient adhesion that enabled temporary bonding at one hour after the components were mixed and applied. In addition, the adhesives immediately after being mixed have a low compressive load and a low viscosity, and thus can also be attached in a sufficiently compressed state to an adherend. The adhesives were able to exhibit sufficient adhesion at 18 hours after the components were mixed and applied, and it was thus possible to provide adhesives having fast curability as well as a long pot life.

On the other hand, in Comparative Example 1, the gel time was excessively short, resulting in that the adhesive had a high compressive load and a high viscosity and, accordingly, a short pot life.

Also, the adhesive prepared in Comparative Example 2 had an excessively long gel time and an excessively low storage elastic modulus at 60 minutes after the components were mixed and applied, thus the curing of the adhesive did not progress sufficiently, and it was not possible to exhibit sufficient adhesion also at 18 hours after the components were mixed and applied.

Moreover, the adhesive prepared in Comparative Example 3 had an excessively low storage elastic modulus at 60 minutes after the components were mixed and applied, thus the curing of the adhesive did not progress sufficiently, and it was not possible to exhibit sufficient adhesion also at 18 hours after the components were mixed and applied.

### Reference Signs List

10 Battery module
11, 21 Battery cell
12 Battery module housing (module housing)
13, 23 Gap filler
20 Battery assembly
25 Base member
30 Syringe
31 First syringe
31A Outlet of first syringe
32 Second syringe
32A Outlet of second syringe
33A, 34ABarrel
33B, 34B Barrel lid
35, 45 First agent
36, 46 Second agent
38 Mixer
39 Outlet of mixer
41 First pail can
42 Second pail can
43A, 44AContainer body having opening
43B, 44B Lid for closing opening of container body

## Claims

1. A curable thermally conductive adhesive comprising a curable composition comprising a curable binder and a thermally conductive filler,
in a measurement with a rheometer at a constant temperature of 25°C, a gel point at which values of a storage elastic modulus and a loss elastic modulus are equal being confirmed at 5 minutes or more and 60 minutes or less from the beginning of rheometer measurement and a storage elastic modulus at 25°C after a lapse of 60 minutes from the beginning of the rheometer measurement is 9.0×10⁵ Pa or more.

2. The curable thermally conductive adhesive according to claim 1, wherein in the measurement with the rheometer, a loss elastic modulus of the curable thermally conductive adhesive at 25°C after a lapse of 15 minutes from the beginning of the rheometer measurement is 3.0×10⁵ Pa or less.

3. The curable thermally conductive adhesive according to claim 1 or 2, wherein the binder comprises an epoxy group-containing compound.

4. The curable thermally conductive adhesive according to claim 1 or 2, wherein the binder comprises at least one of an amine or a thiol.

5. The curable thermally conductive adhesive according to claim 1 or 2, wherein the binder comprises an epoxy group-containing compound and an amine.

6. The curable thermally conductive adhesive according to claim 3, wherein the epoxy group-containing compound comprises a monofunctional epoxy group-containing compound.

7. The curable thermally conductive adhesive according to claim 1 or 2, wherein the binder comprises a Mannich base.

8. The curable thermally conductive adhesive according to claim 1 or 2, wherein the curable composition comprises a polyfunctional acrylate compound, an epoxy group-containing compound, and an amine.

9. The curable thermally conductive adhesive according to claim 1 or 2, wherein an equivalent ratio, which is a ratio of an equivalent of active hydrogen of the curing agent to an equivalent of a functional group of a component constituting a base resin contained in the curable composition, is 1.05 or more and 2.9 or less.

10. A supply form of a curable thermally conductive adhesive, which is a supply form of the curable thermally conductive adhesive according to claim 1 or 2, wherein
a first agent comprising a base resin of the binder and a second agent comprising a curing agent that is cured by being mixed with the first agent are provided in separate containers.

11. The supply form of a curable thermally conductive adhesive according to claim 10, wherein a difference between a viscosity of the first agent and a compressive load of the second agent is 450 N or less.

12. The supply form of a curable thermally conductive adhesive according to claim 10, wherein a ratio of a functional group concentration of the second agent to a functional group concentration of the first agent is 1.05 or more and 2.9 or less.
